# EUROPEAN PATENT APPLICATION

(11) **EP 4 696 602 A1**
(43) Date of publication of application: **18.02.2026**
(21) Application number: 24382906.6
(22) Date of filing: 13.08.2024
(51) Int. Cl.: B64D 1/16

(54) **FLUID DISCHARGING SYSTEM**

(71) Applicant: Airbus Defence and Space, S.A.U., 28022 Madrid (ES)
(72) Inventor: LORITE GARZÓN, Juan, 41020 Sevilla (ES); LACAILLE, Lionel Jean, 41020 Sevilla (ES)
(74) Representative: ABG Intellectual Property Law, S.L.

(57) **Abstract**

The present invention relates to a system (1) for discharging a fluid off an aircraft (10). More particularly, the present invention relates to a discharging system for firefighting aircraft. Also, the present invention is related to a firefighting aircraft (10) comprising the discharging system (1) and a method for discharging a fluid off an aircraft (10) by means of said discharging system (1).

## Description

### TECHNICAL FIELD OF THE INVENTION

The present invention relates to a system for discharging a fluid off an aircraft. More particularly, the present invention relates to a discharging system for firefighting aircraft. Also, the present invention relates to a firefighting aircraft comprising the discharging system and to a method for discharging a fluid off an aircraft by means of said discharging system.

### BACKGROUND OF THE INVENTION

In the aeronautical technical field, aerial firefighting makes use of specific aircrafts or helicopters as resources additional to the on-ground forces in order to combat wildfires. In particular, firefighting aircraft bring support to the firefighters on the ground and can access steep, rocky, difficult to reach or unsafe areas before ground forces are able to make contact with these areas.

Aircraft serve as critical assets in emergency response scenarios, particularly in firefighting operations, where rapid and precise deployment of extinguishing agents or so called fire retardants is essential for containing and extinguishing fires in diverse environments. Conventional aircraft firefighting systems typically involve the use of onboard tanks or reservoirs containing extinguishing agents such as water, foam, or specialized chemicals. Known fire retardants are for example salt compound, water, clay or thickening agent and colouring agent. These types of fire retardants are usually used to slow down or retard the spread of a target fire.

Fluid discharged off aircraft, particularly the first attack on the target fire, generally depends on the location of the fire, the fuels that are located in the area such as vegetation, timber, homes etc. and/or the current weather condition during intervention. Most fires are caught within the first two hours of a burning period, which makes the effectiveness and accuracy of the fluid discharging event off the aircraft crucial.

Firefighter kits or systems are known as temporary construction or devices that are placed inside the cabin of an aircraft, preferably in the cargo bay, cargo area or cargo body in, or around, the fuselage.

Existing firefighting systems based on military transport aircraft are known in the art. These systems are based on gravity conditions and pressurized water drop through the cargo ramp or lateral doors.

Despite their effectiveness in many scenarios, traditional aircraft firefighting systems face challenges in optimizing the distribution and dispersion of extinguishing agents. Fires can exhibit a wide range of behaviors and intensities, necessitating tailored response strategies to effectively combat them and taking advantage of the whole volume of the fluid stored in the tank. However, existing systems often lack of guaranties regarding the loss of fluid due to leakage in the discharging system, more particularly in the discharging conduct, resulting in suboptimal extinguishing effectiveness.

Therefore, there is a need in the art for a fluid discharge system avoiding leakage and loss of water during fluid discharge and enhancing effectiveness of the fire extinction.

### SUMMARY OF THE INVENTION

The present invention provides a system for discharging a fluid off an aircraft according to claim 1, an aircraft according to claim 14 and a method for discharging a fluid off an aircraft according to claim 15. Embodiments of the invention are defined in the dependent claims.

In a first inventive aspect, the invention provides a system for discharging a fluid off an aircraft, the system comprising:
a duct having a first end and a second end, the duct being configured for carrying the fluid from the first end to the second end, wherein the duct comprises at least a first portion and a second portion, the first portion and the second portion being in fluidic communication; wherein the second portion of the duct is coupled to the first portion of the duct and further configured for tilting with respect to the first portion of the duct;
a tank in fluidic communication with the first end of the duct and configured for storing the fluid; and
a covering layer having a first end and a second end,
wherein:
the covering layer extends within the duct from at least part of the first portion of the duct to at least part of the second portion of the duct, and
the covering layer is attached to the first and second portions of the duct.

The system of the invention comprises a duct configured for carrying a fluid from the first end to the second end of the duct. The duct comprises a first portion and a second portion, both in fluidic communication. The second portion of the duct is coupled to the first portion of the duct and is able to tilt with respect to the first portion of the duct.

The tilting of the second portion of the duct with respect to the first portion of the duct helps adapting the duct to the shape of the cargo area of the aircraft. That is, when the system is in operative mode arranged in an aircraft and the system is about to discharge the fluid, the duct of the system of the invention is deployed by way of the opening of the cargo area of the aircraft and the tilting of the second portion permits to adapt to the shape of the cargo ramp. The duct switches from a tilted position into a discharge position. In an embodiment, the duct is substantially straight in the discharge position.

The system for discharging fluid off an aircraft of the invention also comprises a tank in fluidic communication with the duct and, in an embodiment, it is located at the first end of the duct. The tank is configured for storing the fluid to be discharged through the system of the invention. In some embodiments, the fluid stored inside the tank comprises water and/or a flame retardant agent.

The covering layer extends within the duct from at least part of the first portion of the duct to at least part of the second portion of the duct. The covering layer is arranged to cover at least a portion of the inner surface of the first portion of the duct and also at least a portion of the inner surface of the second portion of the duct, as well as the area where the first portion of the duct and the second portion of the duct are coupled.

Advantageously, the covering layer helps avoiding leakage of the fluid to be discharged and prevents said fluid from entering in contact with the duct in the area where the covering layer is provided.

The covering layer is attached to the first and second portions of the duct. In an embodiment, the covering layer is attached to the first and second portions of the duct in a manner which ensures optimal covering of the duct by the covering layer, more particularly, of the area where the first portion and the second portion of the duct are coupled.

In an embodiment, the covering layer is configured for carrying the fluid.

The covering layer located within the duct helps avoiding leakage of fluid by covering the area of the coupling of the first portion with the second portion of the duct. Thus, the covering layer helps reducing loss of fluid during the discharging of said fluid off the aircraft so that the overall performance of the system is enhanced and the volume of fluid discharged is optimal with respect of the volume of fluid stored in the tank before discharging.

The present invention helps implementing a system suitable for long ducts in case of long distance between the tank and the discharge area. The invention also ensures that the fluid is carried in an optimized manner from the tank to the discharge area, even when there exist eventual displacements or misalignments of the duct due to aircraft fuselage bending or stacking of manufacturing tolerances.

In an embodiment, the covering layer extends over only a portion of the perimeter of the inner surface of the duct. In an embodiment, the covering layer extends over the whole perimeter of the inner surface of the duct. In an embodiment, the covering layer covers the whole perimeter of inner surface of the duct.

In an embodiment, the system of the invention further comprises sealing means located at the coupling area between the first portion of the duct and the second portion of the duct in order to close any space existing between the first portion of the duct and the second portion of the duct. In a particular embodiment, the sealing means have anti-fretting capacities in order to protect the covering layer from damage when the second portion of the duct tilts with respect to the first portion.

In an embodiment, the duct comprises a plurality of portions, all in fluidic communication with each other. In other words, in an embodiment, the duct comprises at least one additional portion coupled to the first portion or to the second portion of the duct. In an embodiment, the duct comprises a plurality of additional portions coupled to the first portion and/or to the second portion.

In an embodiment of the first inventive aspect of the invention, the covering layer extends from the first end of the duct to the second end of the duct.

Advantageously, in this embodiment, the covering layer covers all the inner surface of the duct from the first end to the second end of the duct so that it helps avoiding leakage and loss of fluid throughout the duct, more particularly through the coupling of the first portion of the duct with the second portion of the duct, as well as through the couplings of additional portions of the duct, if any. By covering the inner surface of the duct with the covering layer, it ensures an enhanced performance and that a higher volume of fluid reaches the second end of the duct, and thus, more fluid is optimally discharged off the aircraft.

In an embodiment, where the covering layer extends from the first end of the duct to the second end of the duct, the covering layer is attached to the duct at more than two locations along the duct. Preferably, the covering layer is attached to at least part of the portion of the duct closest to the tank that is to the first end of the duct, and to at least part of the portion farthest from the tank, that is the second end of the duct.

In an embodiment of the first inventive aspect of the invention, the duct further comprises at least one additional portion coupled to the first portion or to the second portion of the duct.

In an embodiment, the system further comprises at least one additional covering layer extending from said first portion or second portion of the duct to the at least one additional portion and attached to the first and/or second portions of the duct.

In this embodiment, the at least one additional portion is in fluidic communication with the first portion of the duct and with the second portion of the duct, the additional portion of the duct is located either upstream the first portion or downstream the second portion.

Advantageously, the at least one additional covering layer helps avoiding leakage and loss of fluid along the duct by covering the areas where two portions of the duct are coupled.

In an embodiment, the duct comprises a plurality of additional portions coupled to the first portion and/or to the second portion of the duct and the system comprises a plurality of additional covering layers arranged within the duct and each covering a joint between adjacent portions of the duct.

In an embodiment, the additional covering layer extends over only a portion of the perimeter of the inner surface of the duct. In an embodiment, the additional covering layer extends over the whole perimeter of the inner surface of the duct. In an embodiment, the additional covering layer covers the whole perimeter of inner surface of the duct.

In an embodiment, the system comprises an additional covering layer coupled to the tank and to the duct, at a location where the duct is connected to the tank. Advantageously, this avoids leakage at the location where the tank is connected to the duct. In an embodiment, the additional covering layer coupled to the tank and to the duct is fixed by means of a frame. In an embodiment, the additional covering layer coupled to the tank and to the first portion of the duct extends over only a portion of the perimeter of the inner surface of the duct. In an embodiment, the additional covering layer coupled to the tank and to the first portion of the duct extends over the whole perimeter of inner surface of the duct.

In an embodiment, the covering layer and/or the additional covering layer (if present) is made of a different material than the duct.

In a particular embodiment, the covering layer and/or the additional covering layer (if present) comprises textile material.

In an embodiment, the textile material is made of impermeable material. Advantageously, in this embodiment the covering layer is made of an impermeable material so that the inner surface of the duct is at least partially covered, that is, at least covering the area of the coupling between the first portion of the duct and the second portion of the duct.

Additionally, the covering layer is preferably made of material that is durable and resistant to damage.

In an embodiment, the covering layer is water-resistant.

In an embodiment, the additional covering layer is water-resistant.

According to a particular embodiment, the covering layer is water-resistant so that the whole volume of fluid is guaranteed, said covering layer also avoiding leakage and loss of fluid during the path of the fluid within the duct while discharged from the tank.

In an embodiment, the covering layer is flame-resistant.

In an embodiment, the additional covering layer is flame-resistant.

Advantageously, the covering layer is flame-resistant in order to avoid that the covering layer could catch on fire in the event of backfiring or when the aircraft is close to a fire event.

In an embodiment, the second portion of the duct is configured for tilting at an angle α around 18°.

In an embodiment, the cross-section of the duct is circular, semi-circular or squared, preferably the cross-section of the duct is semi-circular.

In an embodiment, the covering layer is attached to the duct by attaching means.

In an embodiment, the attaching means comprises adhesive, at least one zipper and/or at least one hook and loop fastener.

In a second inventive aspect, the invention provides an aircraft comprising the system according to any of the embodiments of the first inventive aspect of the invention.

In a third inventive aspect, the present invention provides a method for discharging a fluid off an aircraft, the method comprising the following steps:
a) providing a system according to any embodiment of the first inventive aspect or an aircraft according to any embodiment of the second inventive aspect of the invention,
b) actuating the second portion of the duct from a tilted position with respect to the first portion of the duct to a discharge position,
c) discharging the fluid off the aircraft.

By providing a system as the one of the first inventive aspect of the invention, the present method helps ensuring that the volume of fluid discharged through the second end of the duct is optimal with respect to the volume of fluid stored in the tank.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from preferred embodiments of the invention, given just as examples and not being limited thereto, with reference to the drawings.
- Figure 1 - 2: These figures show a schematic side view of part of the system for discharging a fluid off an aircraft according to an embodiment of the invention.
- Figure 3: This figure shows a schematic side view of part of the system for discharging a fluid off an aircraft according to another embodiment of the invention.
- Figure 4: This figure shows a schematic side view of part of the system for discharging a fluid off an aircraft according to another embodiment of the invention.
- Figure 5: This figure shows a schematic view of an aircraft according to an embodiment of the invention.

### DETAILED DESCRIPTION OF THE INVENTION

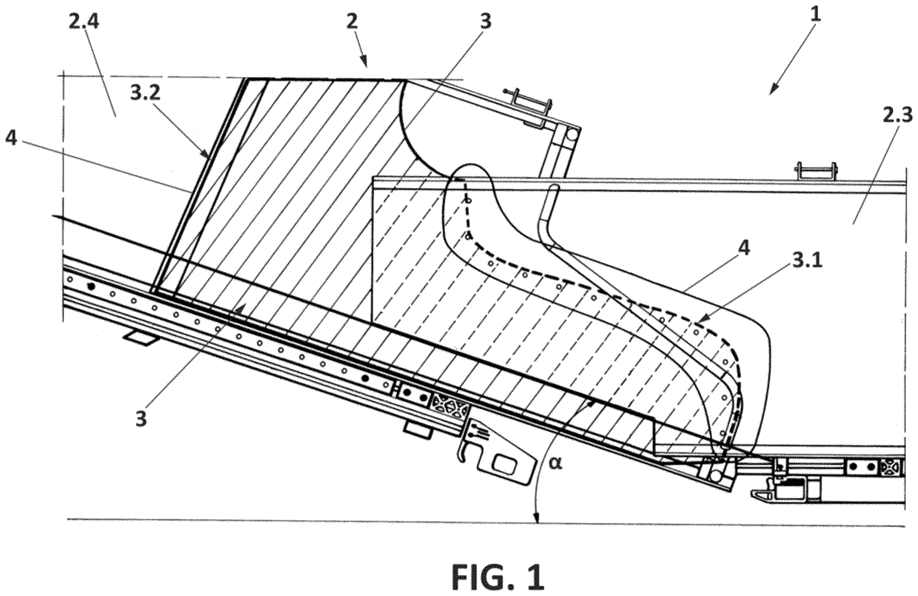

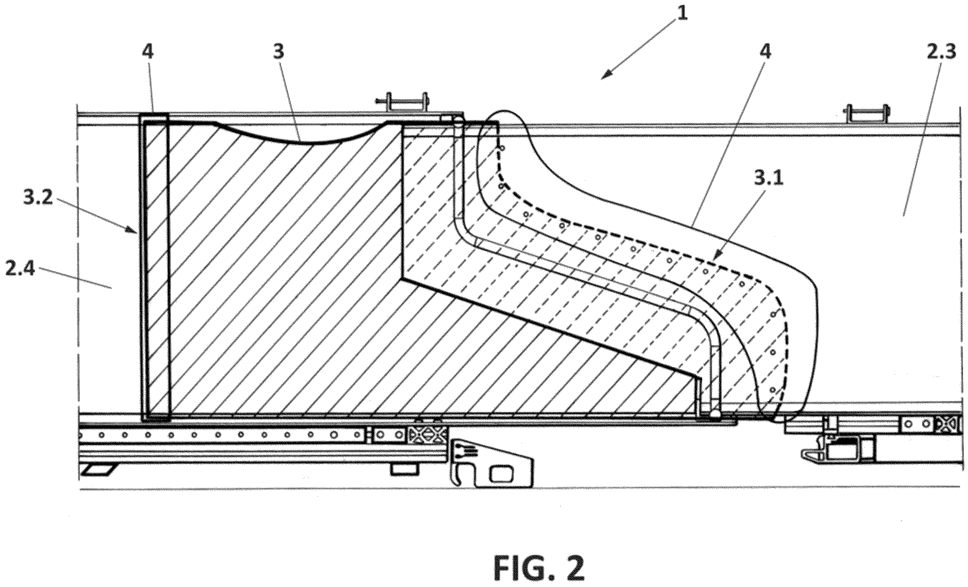

Figures 1 and 2 show a schematic side view of an embodiment of the system (1) for discharging a fluid off an aircraft according to the invention.

Figure 1 shows a duct (2) having first (2.3) and second (2.4) portions and these portions (2.3, 2.4) are in fluidic communication. The duct (2) is configured for carrying the fluid, in particular from the first end to the second end (not shown in this figure).

The second portion (2.4) of the duct (2) is coupled to the first portion (2.3) of the duct (2) as shown in both figures 1 and 2. The second portion (2.4) of the duct (2) is configured for tilting with respect to the first portion (2.3) of the duct (2).

In figure 1, the second portion (2.4) of the duct (2) is in a tilted position at an angle α, the tilted position being an initial position before any discharging of fluid off the aircraft is made.

In preferred embodiments, the angle α is around 18° in the tilted position.

In figure 2, the duct (2) of the system (1) of the invention is depicted at an angle α equal to 0 and both the first portion (2.3) of the duct (2) and the second portion (2.4) of the duct (2) are aligned.

In the embodiment shown in both figures 1 and 2, the system (1) comprises a covering layer (3) which has a first end (3.1) and a second end (3.2).

As shown in this embodiment, the covering layer (3) extends within the duct (2) from part of the first portion (2.3) of the duct (2) to part of the second portion (2.4) of the duct (2). In this embodiment, the covering layer (3) is located in only part of the duct (2).

Also, the covering layer (3) is attached to the first (2.3) and second (2.4) portions of the duct (2). In both the tilted position and the discharged position, the covering layer (3) remains attached to the first portion (2.3) and to the second portion (2.4) of the duct (2).

Advantageously, the covering layer (3) is attached to the first (2.3) and second (2.4) portions of the duct (2) in a manner which ensures optimal covering of the duct (2) by the covering layer (3), more particularly, of the area where the first portion (2.3) and the second portion (2.4) of the duct (2) are coupled. Thus, the covering layer (3) helps avoiding leakage of the fluid to be discharged and prevents that said fluid enters in contact with the duct (2) in the area where the covering layer (3) is provided.

In an embodiment, the covering layer (3) is attached to the duct (2) by attaching means (4).

In an embodiment, the attaching means (4) comprises adhesive, at least one zipper, as shown in figures 1 and 2 and represented by discontinued lines, and/or at least one hook and loop fastener.

The system (1) also comprises a tank (7) which is in fluidic communication with the first end (2.1) of the duct (2) and is configured for storing the fluid.

In an embodiment, the covering layer (3) is made of a different material than the duct (2).

In an embodiment, the covering layer (3) comprises textile material.

In an embodiment, the covering layer (3) is water-resistant.

In an embodiment, the covering layer (3) is flame-resistant.

In an embodiment, the cross-section of the duct (2) is circular, semi-circular or squared. Preferably, the cross-section of the duct (2) is semi-circular.

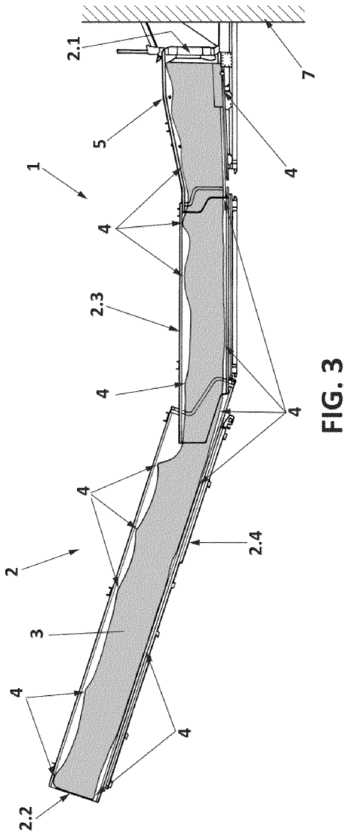

In an embodiment, the duct (2) comprises at least one additional portion (5) coupled to the first portion (2.3) or to the second portion (2.4) of the duct (2). Figure 3 depicts an embodiment of the system (1) of the invention where the duct (2) comprises three portions. In this figure, the second portion (2.4) of the duct (2) is shown in a tilted position and said duct (2) further comprises an additional portion (5) extending from the end of the first portion (2.3) which is opposite to the end of the first portion (2.3) coupled to the second portion (2.4). That is, the additional portion (5) is located between the first portion (2.3) of the duct (2) and the tank (7).

In a discharge position, not shown in this figure, the three portions (2.3, 2.4, 5) of the duct (1) are aligned in order to proceed to the discharge operation of the fluid stored inside the tank.

In the embodiment of the system (1) depicted in figure 3, the covering layer (3) extends within the three portions (2.3, 2.4, 5) of the duct (2). In this particular embodiment, the covering layer (3) extends from the first end (2.1) of the duct (2) to the second end (2.2) of the duct (2).

As shown in figure 3, the covering layer (3) is attached to the first portion (2.3) of the duct (2), to the second portion (2.4) of the duct (2) and to the additional portion (5) of the duct (2) respectively by means of a plurality of attaching means (4) distributed along the duct (2).

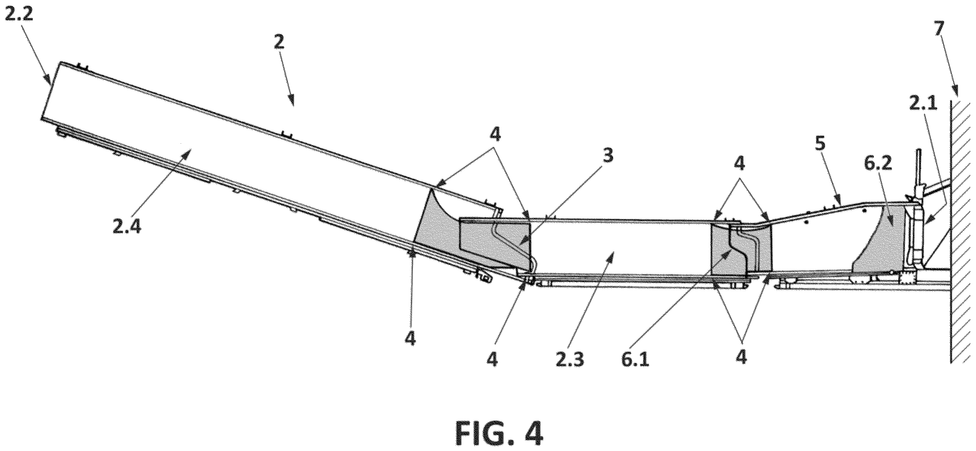

In the embodiment of figure 4, the system (1) comprises a covering layer and two additional covering layers (6.1, 6.2). In this embodiment, the covering layer (3) and one additional covering layer (6.1) only extend in areas covering the coupling area between corresponding portions of the duct (2). For example, if the duct (2) has three portions as the duct (2) shown in figure 4, the covering layer (3) and the additional covering layer (6) cover the coupling area of the first portion (2.3) with the second portion (2.4) of the duct (2) and also the coupling area of the first portion (2.3) with the additional portion (5), respectively. The other additional covering layer (6.2) only extends in an area covering the coupling area between the duct (2) and the tank (7).

In the embodiment shown in figure 4, the fluid enters in contact with the inner surface of the duct (2) where the covering layer (3) and additional covering layer (6) are not implemented. Where the duct (2) shows weaknesses and tendencies to leak or lose fluid, the covering layer (3) and the additional covering layer (6) help protecting these areas, in particular the coupling areas. Therefore, the sealing capacities of the duct (2) is enhanced and ensures high volume of fluid to be discharged through the second end (2.2) of the duct (2).

As shown in figure 4, the covering layer (3) is attached to the first portion (2.3) of the duct (2) and to the second portion (2.4) of the duct (2) by means of a plurality of attaching means (4). Similarly, the additional covering layer (6) is attached to the first portion (2.3) of the duct (2) and to the additional portion (5) of the duct (2) by means of a plurality of attaching means (4).

In an embodiment, the additional covering layer (6) is made of a different material than the duct (2).

In an embodiment, the additional covering layer (6) comprises textile material.

In an embodiment, the additional covering layer (6) is water-resistant.

In an embodiment, the additional covering layer (6) is flame-resistant.

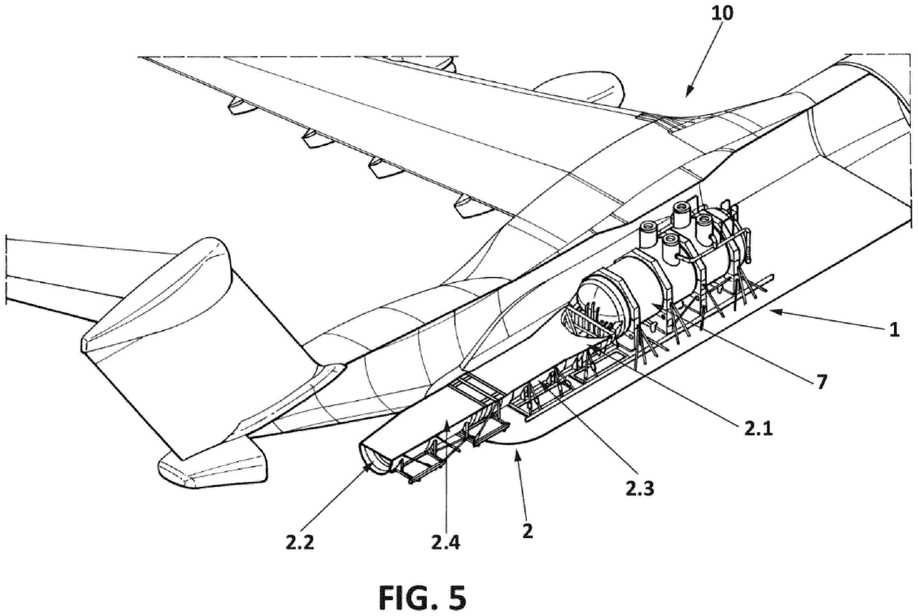

Figure 5 depicts an aircraft (100) comprising a system (1) according to any embodiment of the first inventive aspect of the invention and where the tank (7) is shown at the first end (2.1) of the duct (2).

### Method of the invention

The invention also provides a method for discharging a fluid off an aircraft (10), the method comprising the following steps:
a) providing a system (1) according to any embodiment of the first inventive aspect of the present invention or an aircraft (10) according to any embodiment of the second inventive aspect of the present invention,
b) actuating the second portion (2.4) of the duct (2) from a tilted position with respect to the first portion (2.3) of the duct (2) to a discharge position,
c) discharging the fluid off the aircraft (10).

## Claims

1. A system (1) for discharging a fluid off an aircraft (10), the system comprising:
a duct (2) having a first end (2.1) and a second end (2.2), the duct (2) being configured for carrying the fluid from the first end (2.1) to the second end (2.1), wherein the duct (2) comprises at least a first portion (2.3) and a second portion (2.4), the first portion (2.3) and the second portion (2.4) being in fluidic communication; wherein the second portion (2.4) of the duct (2) is coupled to the first portion (2.3) of the duct (2) and further configured for tilting with respect to the first portion (2.3) of the duct (2);
a tank (7) in fluidic communication with the first end (2.1) of the duct (2) and configured for storing the fluid; and
a covering layer (3) having a first end (3.1) and a second end (3.2), wherein
the covering layer (3) extends within the duct (2) from at least part of the first portion (2.3) of the duct (2) to at least part of the second portion (2.4) of the duct (2), and
the covering layer (3) is attached to the first (2.3) and second (2.4) portions of the duct (2).

2. The system (1) according to the previous claim, wherein the covering layer (3) extends from the first end (2.1) of the duct (2) to the second end (2.2) of the duct (2).

3. The system (1) according to any of the previous claims, wherein the duct (2) comprises at least one additional portion (5) coupled to the first portion (2.3) or to the second portion (2.4) of the duct (2).

4. The system (1) according to the previous claim, wherein the system (1) further comprises at least one additional covering layer (6.1) extending within the duct (2) from said first portion (2.3) or second portion (2.4) of the duct (2) to the at least one additional portion (5) and attached to the first portion (2.3) or to the second (2.4) portion of the duct (2) and to the at least one additional portion (5).

5. The system (1) according to any of the previous claims, wherein the system (1) further comprises an additional covering layer (6.2) extending from the duct (2) to the tank (7).

6. The system (1) according to any of the preceding claims, wherein the covering layer (3) is made of a different material than the duct (2).

7. The system (1) according to any of the preceding claims, wherein the covering layer (3) comprises textile material.

8. The system (1) according to any of the preceding claims, wherein the covering layer (3) is water-resistant.

9. The system (1) according to any of the preceding claims, wherein the covering layer (3) is flame-resistant.

10. The system (1) according to any of the preceding claims, wherein the second portion (2.4) of the duct (2) is configured for tilting at an angle α around 18°.

11. The system (1) according to any of the preceding claims, wherein the cross-section of the duct (3) is circular, semi-circular or squared, preferably the cross-section of the duct (3) is semi-circular.

12. The system (1) according to any of the preceding claims, wherein the covering layer (3) is attached to the duct (2) by attaching means (4).

13. The system (1) according to the preceding claim, wherein the attaching means (4) comprises adhesive, at least one zipper and/or at least one hook and loop fastener.

14. An aircraft (10) comprising the system (1) according to any of the preceding claims.

15. A method for discharging a fluid off an aircraft (10), the method comprising the following steps:
a) providing a system (1) according to any of claims 1 to 13 or an aircraft (10) according to claim 14,
b) actuating the second portion (2.4) of the duct (2) from a tilted position with respect to the first portion (2.3) of the duct (2) to a discharge position,
c) discharging the fluid off the aircraft (10).
